# NEUE EUROPÄISCHE PATENTSCHRIFT

(11) **EP 3 025 077 B2**
(45) Veröffentlichungstag und Bekanntmachung des Hinweises auf die Entscheidung über den Einspruch: **30.09.2020**
(45) Hinweis auf die Patenterteilung: 06.09.2017
(21) Anmeldenummer: 14726366.9
(22) Anmeldetag: 26.05.2014
(51) Int. Cl.: F16J 3/02, F16K 37/00

(54) **MEMBRAN UND VERFAHREN ZU DEREN HERSTELLUNG**
MEMBRANE AND METHOD FOR THE PRODUCTION THEREOF
MEMBRANE ET PROCÉDÉ DE FABRICATION DE LADITE MEMBRANE

(30) Priorität: 22.07.2013 DE 102013214304
(43) Veröffentlichungstag der Anmeldung: 01.06.2016
(73) Patentinhaber: GEMÜ Gebr. Müller Apparatebau GmbH & Co. Kommanditgesellschaft, 74653 Ingelfingen (DE)
(72) Erfinder: MUELLER, Gert, 74653 Kuenzelsau (DE); FLOEGEL, Werner, 74677 Doerzbach (DE); FICK, Matthias, 74653 Kuenzelsau (DE)
(74) Vertreter: DREISS Patentanwälte PartG mbB
(86) Internationale Anmeldenummer: PCT/EP2014/060826
(87) Internationale Veröffentlichungsnummer: WO 2015/010810

(56) Entgegenhaltungen:
- EP-A1- 2 242 004
- EP-A2- 0 319 163
- EP-A2- 2 145 633
- EP-B1- 0 972 636
- EP-B1- 1 479 910
- EP-B1- 1 893 422
- EP-B1- 2 084 654
- WO-A1-2013/050561
- WO-A2-2008/008746
- DE-A1- 10 354 833
- DE-A1-102006 039 501
- DE-A1-102008 040 729
- DE-A1-102009 049 676
- DE-A1-102010 031 204
- DE-B4-102009 060 862
- DE-U1-202010 016 827
- US-A- 4 781 535
- US-A1- 2005 092 079
- US-A1- 2005 189 408
- US-A1- 2008 020 178
- US-A1- 2010 294 421
- US-A1- 2011 240 747

## Beschreibung

Die Erfindung betrifft eine Membran, wobei die Membran aus mehreren Lagen aufgebaut ist, und wobei mindestens eine der Lagen aus einem Elastomer besteht.

Eine derartige Membran ist allgemein bekannt. Auf der Membran sind dabei häufig Daten der Membran aufgedruckt oder eingeprägt.

Die Erfindung betrifft ebenfalls ein Verfahren zur Herstellung der Membran.

Die US 2008/020178 A1 offenbart eine übliche Membran, die aus mehreren Lagen und zumindest teilweise aus einem Elastomer aufgebaut ist, und die als Funktionsbereich eine Membranfläche besitzt.

Aus der US 2005/189408 A1 ist ein üblicher Dichtring offenbart, der aus mehreren Schichten aufgebaut ist, wobei zwischen zwei Schichten ein RFID-Chip angeordnet ist.

In ähnlicher Weise geht aus der EP 2 242 004 A1 ein Dichtelement hervor, bei dem innerhalb eines Anbindungsbereichs ein Datenträger untergebracht ist.

Aufgabe der Erfindung ist es, die bekannte Membran insbesondere im Hinblick auf die Zuordnung von Daten zu verbessern.

Bei der eingangs genannten Membran wird diese Aufgabe durch die kennzeichnenden Merkmale des Anspruchs 1 gelöst.

Durch die Verwendung eines elektronischen Datenträgers werden die Möglichkeiten der Zuordnung von Daten zu der Membran nahezu unbegrenzt erweitert. So können nicht nur Daten betreffend die Materialien, die Abmessungen, die Herstellung und ähnlichen Kenngrößen der Membran in dem Datenträger abgespeichert werden, sondern auch Daten betreffend den jeweiligen Kunden, die Lieferung und so weiter. All diese Daten können dabei auf die jeweilige einzelne Membran ausgerichtet sein und auf deren zugehörigem Datenträger abgespeichert werden.

Durch das Umschließen des Datenträgers von den Lagen der Membran und der oberen und unteren Schicht wird ein Schutz des Datenträgers vor Umwelteinflüssen sowie ein Schutz vor dem Betriebsmedium der Membran erreicht. Insbesondere Öle oder Schmutz oder dergleichen haben damit keinen Einfluss auf die Auslesbarkeit von Daten aus dem Datenträger.

Erfindungsgemäß ist die Membran mit einer Lasche versehen, die über die Membranfläche hinausragt, und wobei der Datenträger in der Lasche angeordnet ist.

Durch das Überstehen der Lasche über die Membranfläche und damit über den Funktionsbereich der Membran, sowie aufgrund der Anordnung des Datenträgers in der Lasche wird erreicht, dass ein Lesegerät im Umfeld des Datenträgers platziert und mit dem Lesegerät Daten aus dem Datenträger ausgelesen werden können. Insbesondere kann auf diese Weise erreicht werden, dass beispielsweise Gehäuseteile, zwischen die die Membran verbaut ist, keinen oder nur einen geringen Einfluss auf die Platzierung des Lesegeräts bzw. die Auslesbarkeit der Daten haben.

Bei einer Ausgestaltung der Erfindung ist als Datenträger ein RFID-Chip (RFID = radio frequency identification) vorhanden. Vorzugsweise ist der RFID-Chip scheibenförmig ausgebildet. Dabei ist es vorteilhaft, wenn eine Scheibenfläche des RFID-Chips in einer etwa parallelen Ebene zu der Membranfläche ausgerichtet ist. Häufig ist in dem RFID-Chip im Bereich einer seiner Scheibenflächen eine Antenne vorhanden. Durch die etwa parallele Ausrichtung der Scheibenfläche zur Membranfläche wird erreicht, dass das Lesegerät besonders gut der Antenne des RFID-Chips zugeordnet werden kann. Damit wird das Auslesen von Daten aus dem Datenträger verbessert.

Bei dem Verfahren zur Herstellung der Membran ist vorgesehen, dass die Tasche als Ausnehmung in den jeweiligen Materialien der einzelnen Lagen ausgespart wird. Werden danach die Lagen der Membran aufeinander aufgebaut, so entsteht dadurch die Tasche für den Datenträger. In diese Tasche kann dann der Datenträger eingelegt und zusammen mit den aufeinander aufgebauten Lagen der Membran vulkanisiert werden.

Besonders zweckmäßig ist es, wenn zum Aufbau der einzelnen Lagen ein Werkzeug, insbesondere ein Formnest verwendet wird. Damit kann eine positions- und lagestabile Anordnung der Lagen erreicht werden.

Weitere Merkmale, Anwendungsmöglichkeiten und Vorteile der Erfindung ergeben sich aus der nachfolgenden Beschreibung von Ausführungsbeispielen der Erfindung, die in den zugehörigen Figuren dargestellt sind. Dabei bilden alle beschriebenen oder dargestellten Merkmale für sich oder in beliebiger Kombination den Gegenstand der Erfindung, die nur durch den Schutzumfang der beigefügten Patentansprüche begrenzt wird.

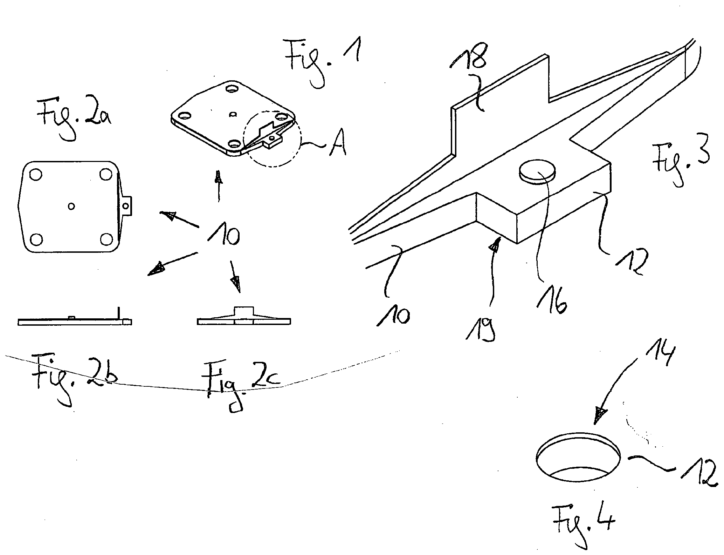

Die Figur 1 zeigt eine schematische Perspektivansicht eines Ausführungsbeispiels einer erfindungsgemäßen Membran, die Figuren 2a, 2b, 2c zeigen eine Draufsicht, eine Seitenansicht und eine Vorderansicht der Membran der Figur 1, die Figur 3 zeigt eine Perspektivansicht des Ausschnitts A der Figur 1, und die Figur 4 zeigt eine Perspektivansicht einer in der Membran der Figur 1 vorhandenen Tasche.

In den Figuren 1 bis 4 ist eine Membran 10 dargestellt, die bei einem Ventil zum Einsatz kommen kann, nämlich bei einem pneumatischen oder hydraulischen oder elektrisch betriebenen Membranventil. Die Membran 10 weist in der Draufsicht eine etwa rechteckige Membranfläche auf und besitzt quer zu der Membranfläche eine im Wesentlichen gleichbleibende Membrandicke.

Es versteht sich, dass die Membran 10 auch eine andersartig ausgebildete geometrische Form aufweisen kann. Beispielsweise kann die Membran 10 auch rund ausgeformt sein.

Die etwa rechteckige Membranfläche stellt den Funktionsbereich der Membran 10 dar. Etwa in diesem Funktionsbereich ist die Membran 10 mit dem zugehörigen Ventil verbaut. Beispielsweise kann die Membran 10 innerhalb des Funktionsbereichs zwischen zwei Gehäuseteilen des zugehörigen Ventils angeordnet sein.

An einer der Längsseiten weist die Membran 10 eine Lasche 12 auf. Im vorliegenden Ausführungsbeispiel ist die Lasche 12 als etwa rechteckiger Vorsprung ausgebildet, der über die etwa rechteckige Membranfläche hinaussteht. Die Abmessungen der Lasche 12, insbesondere die Erstreckung der Lasche 12 etwa quer zu der zugehörigen Längsseite der Membran 10, sind dabei derart gewählt, dass die Lasche 12 möglichst auch über gegebenenfalls vorhandene Gehäuseteile des zugehörigen Ventils hinaussteht.

Es versteht sich, dass die Lasche 12 auch eine andersartig ausgebildete geometrische Form aufweisen kann.

Die Membran 10 mit der Lasche 12 ist aus einer Mehrzahl von Lagen aufgebaut, wobei jede der einzelnen Lagen aus einem Elastomer oder einem Gewebe oder einer Stabilisierungslage oder dergleichen bestehen kann, und wobei die Elastomere und die Gewebe der verschiedenen Lagen jeweils aus unterschiedlichen Materialien bestehen können, beispielsweise aus Gummi oder aus Silikon oder dergleichen.

In der Lasche 12 ist eine Tasche 14 vorhanden. Es wird hierzu auf die Figur 4 hingewiesen. Die Tasche 14 ist etwa mittig innerhalb der etwa rechteckigen Lasche 12 angeordnet. Im vorliegenden Ausführungsbeispiel ist die Tasche 14 etwa kreisförmig ausgebildet, wobei die Achse der Tasche 14 etwa quer zu der von der Lasche 12 gebildeten Fläche ausgerichtet ist. Die Tasche 14 besitzt in axialer Richtung eine Tiefe, die kleiner ist als die Membrandicke.

In der Tasche 14 ist ein elektronischer Datenträger 16 untergebracht. Es wird hierzu auf die Figur 3 hingewiesen. Der Datenträger 16 ist etwa scheibenförmig ausgebildet und besitzt in axialer Richtung eine Dicke. Die Abmessungen der Tasche 14 und des Datenträgers 16 sind derart aneinander angepasst, dass der Datenträger 16 während der Herstellung der Membran 10 in die Tasche 14 eingesetzt werden kann.

Es versteht sich, dass der Datenträger 16 auch eine andersartig ausgebildete geometrische Form aufweisen kann. Die Tasche 14 ist dann in entsprechender Weise an diese Form angepasst.

Der Datenträger 16 kann nach dem Einsetzen in die Tasche 14 entweder über die Tasche 14 überstehen, wie dies in der Figur 3 angedeutet ist, oder er kann auch ohne einen Überstand in der Tasche 14 aufgenommen sein.

Bei dem Datenträger 16 kann es sich um jegliches elektronisches Bauteil handeln, auf dem Daten abgespeichert und wieder ausgelesen werden können. Insbesondere kann es sich bei dem Datenträger 16 um einen sogenannten RFID-Chip (RFID = radio frequency identification) handeln, der üblicherweise einen Transponder aufweist, in den Daten eingeschrieben werden können, die dann von einem Lesegerät mit Hilfe von elektrischen Wellen ausgelesen werden können.

Die Tasche 14 ist im fertig hergestellten Zustand der Membran 10 auf ihrer Unterseite und ihrer Oberseite verschlossen. Im vorliegenden Ausführungsbeispiel wird dies durch eine obere Schicht 18 sowie eine untere Schicht 19 erreicht. Diese beiden Schichten 18, 19 bilden die unterste und die oberste Lage der Membran 10 und der Lasche 12.

Im fertig hergestellten Zustand der Membran 10 ist der Datenträger 16 damit in der Lasche 12 eingebettet. Insbesondere ist der Datenträger 16 von dem Material der Lagen der Lasche 12 sowie von der oberen und unteren Schicht 18, 19 umschlossen. Der Datenträger 16 ist damit vollständig innerhalb dem Material der Lagen sowie der oberen und unteren Schicht der Membran 10 enthalten.

Ein Zugang von außen zu dem Datenträger 16 ist nicht vorhanden und ein Austausch des Datenträgers 16 ist ohne eine Zerstörung der erläuterten Einbettung des Datenträgers 16 in der Lasche 12 ebenfalls nicht möglich.

In den Figuren 1 bis 3 ist die obere Schicht 18 zum Zwecke der Darstellung im Bereich der Lasche 14 etwa quer abstehend zur Membran 10 dargestellt. Es wird darauf hingewiesen, dass die Schicht 18 im fertig hergestellten Zustand der Membran 10 tatsächlich nicht quer absteht, sondern dass sie auch im Bereich der Lasche 14 eben ausgerichtet ist und damit mit der darunterliegenden Lage der Membran 10 flächig verbunden ist. Die Tasche 14 wird damit von der Schicht 18 abgedeckt und, wie erwähnt, verschlossen.

Der Datenträger 16 ist somit in der Lasche 12 enthalten und von dem Material der Lasche 12 umgeben. Die Lasche 12 steht dabei über den Funktionsbereich der Membran 10 über.

Wie erläutert, ist die Achse der Tasche 14 und damit des Datenträgers 16 im vorliegenden Ausführungsbeispiel etwa quer zu der von der Lasche 12 gebildeten Fläche ausgerichtet. Damit verläuft die obere und untere Scheibenfläche des Datenträgers 16 im vorliegenden Ausführungsbeispiel in einer etwa parallelen Ebene zu der Membranfläche. Unter der Annahme, dass, insbesondere bei einem RFID-Chip, im Bereich der oberen oder unteren Scheibenfläche häufig eine Antenne angeordnet ist, ist es möglich, im eingebauten Zustand der Membran 10 ein Lesegerät oberhalb oder unterhalb der Lasche 12 und damit unmittelbar bei der Scheibenfläche des Datenträgers 16 zu platzieren und dann die Daten auszulesen.

Alternativ ist es auch möglich, dass der Datenträger 16 mit seiner Scheibenfläche andersartig innerhalb der Lasche 12 angeordnet ist. Beispielsweise ist es möglich, dass die Scheibenfläche des Datenträgers 16 etwa parallel zu der vorderen Längsseite der Lasche 12 verläuft. In diesem Fall ist es möglich, im eingebauten Zustand der Membran 10 ein Lesegerät vor der vorderen Längsseite der Lasche 12 und damit vor der Scheibenfläche des Datenträgers 16 zu platzieren und dann den Datenträger 16 auszulesen.

Weiterhin ist es alternativ möglich, dass ein Datenträger zur Anwendung kommt, der eine andere Form besitzt als es in den Figuren 1 bis 3 gezeigt ist. Beispielsweise kann es sich um eine rechteckige oder ovale Form handeln. In diesen Fällen kann der Datenträger wiederum derart innerhalb der Lasche 12 angeordnet sein, dass ein Lesegerät möglichst unmittelbar gegenüber einer Antenne des Datenträgers platziert werden kann.

In Abhängigkeit von der Ausgestaltung der Lasche 12 sowie in Abhängigkeit von der Form des Datenträgers 16 bzw. der Anordnung einer Antenne innerhalb des Datenträgers 16 kann mit Hilfe der vorstehend erläuterten Möglichkeiten eine im Hinblick auf möglichst gute Empfangsbedingungen optimale Lage und Anordnung des Datenträgers 16 innerhalb der Lasche 12 erreicht werden.

Nachfolgend wird ein mögliches Verfahren zur Herstellung der Membran 10 erläutert.

Wie erläutert, sind die Membran 10 und die Lasche 12 aus mehreren Lagen aufgebaut. Die erwünschte Außenkontur der Membran 10 mit der Lasche 12 wird zuerst aus den jeweiligen Materialien der einzelnen Lagen ausgeschnitten. Beispielsweise wird diese Außenkontur aus dem oder den vorgesehenen Elastomeren sowie aus dem oder den vorgesehenen Gewebe-Materialien ausgestanzt. Dabei wird die Tasche 14 in der Lasche 12 ebenfalls berücksichtigt und als Ausnehmung aus dem jeweiligen Material ausgespart.

In entsprechender Weise werden auch die obere und die untere Schicht 18, 19 aus dem vorgesehenen Material ausgeschnitten, wobei hier keine Ausnehmungen für die Tasche 14 ausgespart werden.

Danach werden die einzelnen ausgeschnittenen Lagen der Membran 10 und der Lasche 12 in der erwünschten Reihenfolge aufeinander aufgebaut und in ein Werkzeug, insbesondere in ein Formnest eingebracht. Im Rahmen dieser Maßnahmen, insbesondere vor dem Aufbringen der oberen Schicht 18 auf die darunter liegenden Lagen der Membran 10, wird der Datenträger 16 in die Tasche 14 eingelegt.

Danach wird der in dem Werkzeug vorhandene Aufbau der Lagen der Membran 10 zusammen mit dem darin enthaltenen Datenträger 16 vulkanisiert.

Steht der Datenträger 16, wie erwähnt, über die Tasche 14 über, so wird dieser Überstand bei dem vorgenannten Vulkanisieren der Membran 10 ausgeglichen. Beispielsweise ist es möglich, dass der Überstand des Datenträgers 16 in die zugehörige Schicht 18, 19 eingedrückt wird.

Zum Zwecke der Justierung der ausgeschnittenen Lagen aufeinander ist es möglich, dass in die die Tasche 14 bildenden Ausnehmungen der einzelnen Lagen ein zylindrisches Bauteil eingesteckt wird. Dieses Bauteil kann entweder nach dem Aufbau der gesamten Membran 10 wieder entfernt werden, oder es kann auch in der Membran 10 verbleiben, wobei in diesem Fall der Datenträger 16 dann in das zylindrische Bauteil eingelegt wird.

Es versteht sich, dass auch andere Herstellverfahren für die Membran 10 und die Lasche 12 denkbar sind. Das erfindungsgemäße Verfahren wird nur durch die Merkmale des Anspruchs 5 begrenzt.

## Patentansprüche

1. Membran (10) für ein Membranventil, wobei die Membran (10) aus mehreren Lagen aufgebaut ist, und wobei mindestens eine der Lagen aus einem Elastomer besteht, wobei die Membran (10) eine obere und eine untere Schicht (18, 19) aufweist, und wobei die Membran (10) eine Membranfläche aufweist, die den Funktionsbereich der Membran (10) darstellt, **dadurch gekennzeichnet, dass** die Membran (10) mit einer Lasche (12) versehen ist, die über die Membranfläche hinausragt, dass in der Lasche (12) ein elektronischer Datenträger (16) angeordnet ist, und dass der Datenträger (16) von den Lagen der Membran (10) und der oberen und der unteren Schicht (18, 19) umschlossen ist.

2. Membran (10) nach Anspruch 1, wobei als Datenträger (16) ein RFID-Chip (RFID = radio frequency identification) vorhanden ist.

3. Membran (10) nach Anspruch 2, wobei der RFID-Chip scheibenförmig ausgebildet ist.

4. Membran (10) nach Anspruch 3, wobei eine Scheibenfläche des RFID-Chips in einer etwa parallelen Ebene zu der Membranfläche ausgerichtet ist.

5. Verfahren zur Herstellung der Membran (10) nach einem der vorstehenden Ansprüche mit den folgenden Schritten: die Außenkontur der Membran (10) und der Lasche (12) wird aus den jeweiligen Materialien der einzelnen Lagen ausgeschnitten, eine Tasche (14) wird als Ausnehmung in den jeweiligen Materialien der einzelnen Lagen ausgespart, die Außenkontur der Membran (10) und der Lasche (12) wird aus der oberen und der unteren Schicht (18, 19) ausgeschnitten, die einzelnen ausgeschnittenen Lagen werden aufeinander aufgebaut, der Datenträger (16) wird in die Tasche (14) eingelegt, der Aufbau der Lagen der Membran (10) mit dem darin enthaltenen Datenträger (16) werden vulkanisiert.

6. Verfahren nach Anspruch 5, wobei zum Aufbau der einzelnen ausgeschnittenen Lagen ein Werkzeug, insbesondere ein Formnest verwendet wird.

## Claims

1. Membrane (10) for a membrane valve, wherein the membrane (10) comprises a plurality of layers, wherein at least one of said plurality of layers is an elastomer, wherein the membrane (10) comprises an upper and lower layer (18, 19), and wherein the membrane (10) comprises a membrane surface which represents a functional region of the membrane (10), **characterised in that** the membrane (10) comprises a projection (12), which extends beyond the membrane surface, that an electronic data medium (16) is disposed in the projection (12), and that the electronic data medium (16) is enclosed by the upper and lower layers (18, 19) of the membrane (10).

2. Membrane (10) according to claim 1, wherein an RFID chip (RFID: Radio Frequency Identification) is present as the electronic data medium (16).

3. Membrane (10) according to claim 2, wherein the RFID chip is designed in the shape of a disk.

4. Membrane (10) according to claim 3, wherein a disk surface of the RFID chip is oriented in a plane that is basically parallel to the membrane surface.

5. Method for the production of the membrane (10) according to one of the preceding claims, the method comprising the steps of:
cutting an outer contour of the membrane (10) and the projection (12) out of respective materials for the individual layers, wherein a pocket (14) is formed as a recess in the respective materials of the individual layers, cutting the outer contour of the membrane (10) and the projection (12) out of upper and lower layers (18, 19), placing individually cut-out layers on top of one another, placing the electronic data medium (16) in the pocket (14); vulcanizing the construction of the layers of the membrane (10), and the electronic data medium (16) contained therein.

6. The method according to claim 5, wherein a tool, in particular a mold, is used to assemble the individually cut-out layers.

## Revendications

1. Membrane (10) pour une vanne à membrane, cette membrane (10) étant constituée de plusieurs couches, et au moins une des couches étant constituée d'un élastomère, la membrane (10) comprenant une couche supérieure et une couche inférieure (18, 19) et la membrane (10) comprenant une surface de membrane qui constitue la partie fonctionnelle de la membrane (10), **caractérisée en ce que** la membrane (10) est munie d'une patte (12) qui dépasse de la surface de la membrane, **en ce que** dans la patte (12) est disposé un support de données électronique (16) et **en ce que** le support de données (16) est entouré par les couches de la membrane (10) et la couche supérieure et la couche inférieure (18, 19).

2. Membrane (10) selon la revendication 1, le support de données (16) étant une puce RFID (RFID = radio frequency identification).

3. Membrane (10) selon la revendication 2, la puce RFID présentant la forme d'un disque.

4. Membrane (10) selon la revendication 3, une surface du disque de la puce RFID est alignée avec un plan approximativement parallèle à la surface de la membrane.

5. Procédé de fabrication de la membrane (10) selon l'une des revendications précédentes, comprenant les étapes suivantes: le contour extérieur de la membrane (10) et de la patte (12) est découpée dans les matériaux des différentes couches, une poche (14) est réalisée sous la forme d'un évidement dans les matériaux correspondants des différentes couches, le contour extérieur de la membrane (10) et de la patte (12) est découpé dans la couche supérieure et la couche inférieure (18, 19), les différentes couches découpées sont superposées, le support de données (16) est inséré dans la poche (14), la structure des couches de la membrane (10) est vulcanisée avec le support de données (16) contenu à l'intérieur.

6. Procédé selon la revendication 5, un outil, de préférence une cavité de moulage, étant utilisé pour la disposition des différentes couches découpées.
